# EUROPEAN PATENT SPECIFICATION

(11) **EP 3 200 659 B1**
(45) Date of publication and mention of the grant of the patent: **04.12.2019**
(21) Application number: 15847279.5
(22) Date of filing: 01.10.2015
(51) Int. Cl.: A47J 31/06, A47J 31/18, A47J 31/44, A47J 31/20

(54) **COFFEE PRESS**
KAFFEEPRESSE
CAFETIÈRE À PISTON

(30) Priority: 03.10.2014 US 201462059195 P
(43) Date of publication of application: 09.08.2017
(73) Proprietor: Lifetime Brands, Inc., Garden City, NY 11530 (US)
(72) Inventor: MARTIJA, Armando, Garden City, NY 11530 (US); RANDALL, Lindsay, Garden City, NY 11530 (US)
(74) Representative: Harding, Andrew Philip
(86) International application number: PCT/US2015/053437
(87) International publication number: WO 2016/054336

(56) References cited:
- EP-A1- 0 615 714
- EP-A1- 0 615 714
- EP-A1- 2 705 781
- WO-A2-2012/025125
- DE-C1- 3 432 289
- US-A1- 2003 047 081
- US-A1- 2006 124 628
- US-A1- 2013 037 469
- US-A1- 2013 284 030
- US-A1- 2014 205 725
- US-A1- 2014 242 240
- BOWERS , B: 'Kickstarter: The Espro Press' KICKSTARTER, [Online] 04 March 2012, pages 1 - 2, XP055426504 Retrieved from the Internet: <URL:<HTTP://WEB.ARCHIVE.ORG/WEB/2012030402 1643/HTTP://GEARPATROL.COM/2011/12/20/THE-E SPRO-PRESS>> [retrieved on 2015-11-30]

## Description

### CROSS REFERENCE TO RELATED APPLICATIONS

This application claims priority from U.S. Provisional Application Serial No. 62/059,195 filed on October 3, 2014.

### BACKGROUND

### Technical Field

The present principles relate to coffee makers. More particularly, they relate to the incorporation of a grounds basket into a French coffee press device.

### Description of the related art

The use of coffee maker known as a French Presses commonly known. It is well known to use French press coffee makers to "steep" coffee. Namely, boiling water is mixed with coarsely ground coffee in a container or carafe. After the coffee is allowed to steep for several minutes, one presses down on a handle, thus containing the grounds in the bottom of the container beneath a perforated disk. The disk is perforated to allow the liquid coffee to pass through the disk as the disk is being lowered through the liquid. The coffee can then be poured (or drunk directly) from the container while the grounds are prevented from flowing out of the container.

One primary disadvantage to the current designs of French presses is when it comes time to clean the same. Although the grounds are compressed at the bottom of the press, they are loose at the bottom of the carafe and need to be removed from the bottom after brewing. This removal process is difficult and tedious, and often deters individuals from wanting to use the French press at all.

It would therefore be desirable to have a French Press design that allows for easy removal of the grounds, and therefore easier cleaning and ultimate use of the same.
DE 3432289 U discloses a coffee maker including a container and a filter plunger guided in the coffee container. The coffee container includes a collecting dish which may be coupled to the pressed down filter plunger and pulled out of the container.
WO 2012/025125 discloses a similar device, wherein the bowl for collecting coffee, tea, etc., may couple with the plunger via a magnet.

### SUMMARY

The present principles provide a coffee grounds basket within the French Press that is configured to completely contain the coffee grounds within the same. The coffee grounds basket is attached to the center stem and moves with the same during the press action.

According to the invention, the coffee press includes the features of claim 1.

Other aspects and features of the present principles will become apparent from the following detailed description considered in conjunction with the accompanying drawings. It is to be understood, however, that the drawings are designed solely for purposes of illustration and not as a definition of the limits of the present principles, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings wherein like reference numerals denote similar components throughout the views:
FIG. 1 shows a cross-sectional view of the French Press coffee maker with coffee grounds basket, according to one implementation of the present principles;

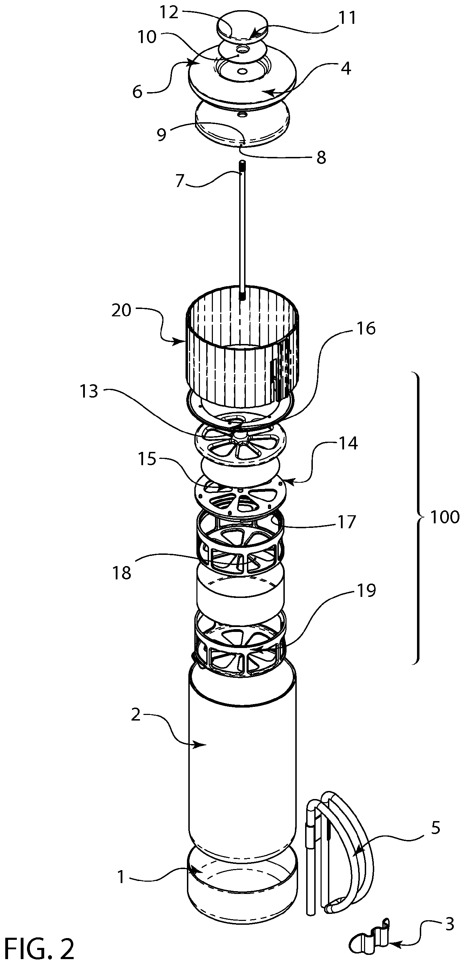

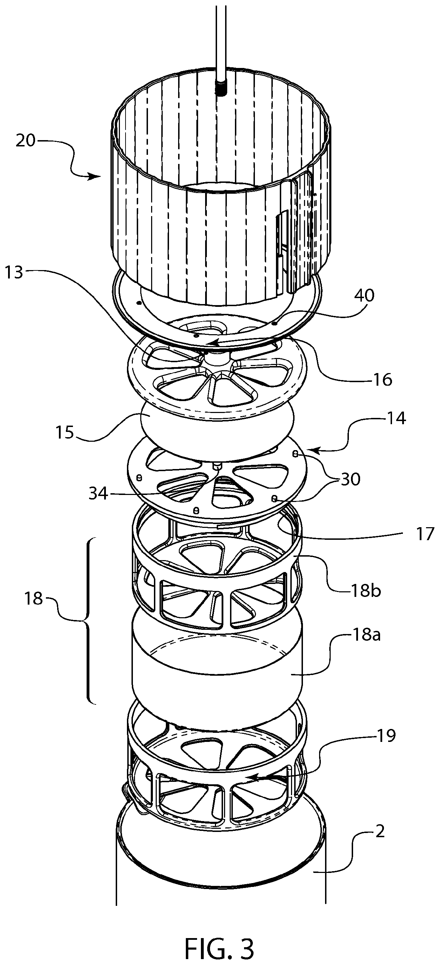

FIGS. 2 and 3 show exploded perspective views of the French Press coffee maker with coffee grounds basket, and the coffee grounds basket, respectively, according to an implementation of the present principles; and

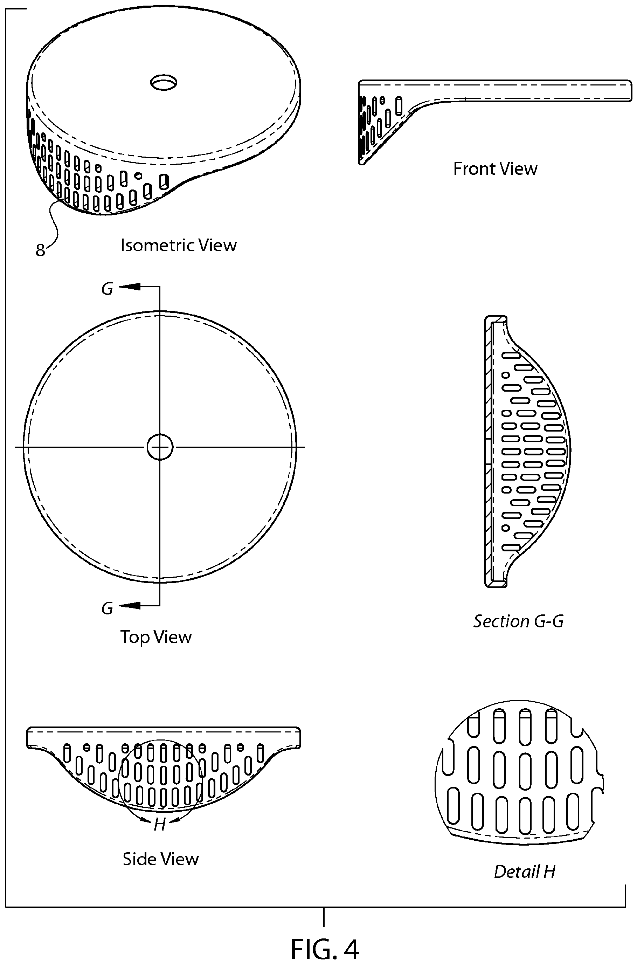

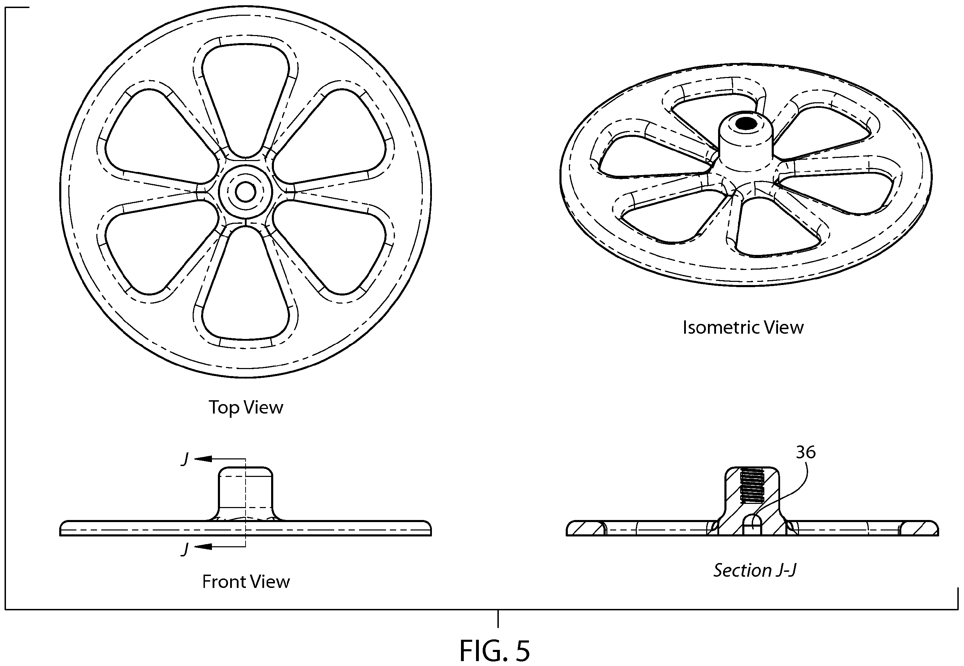

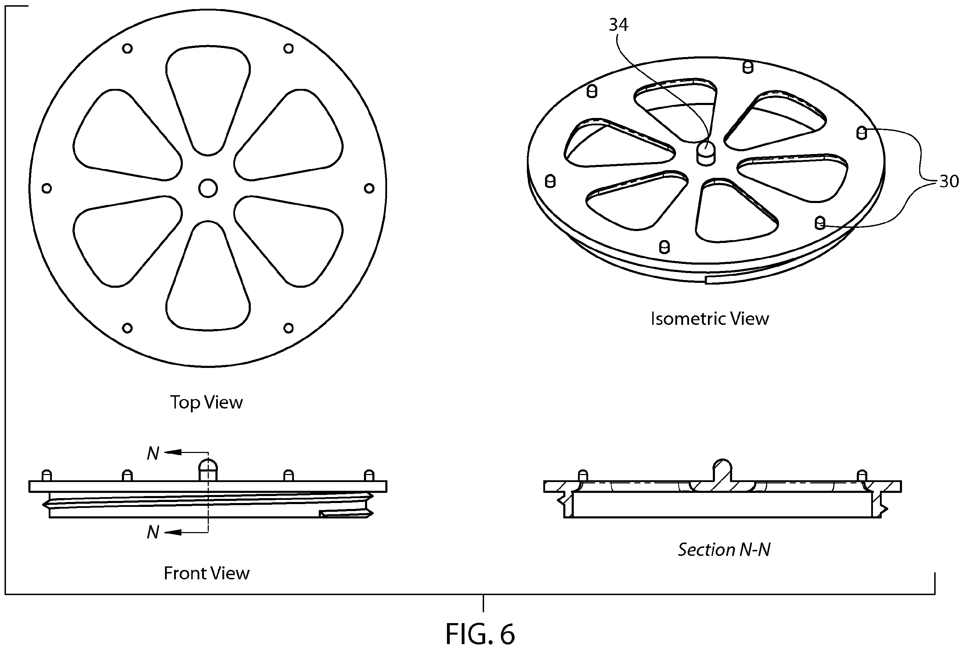

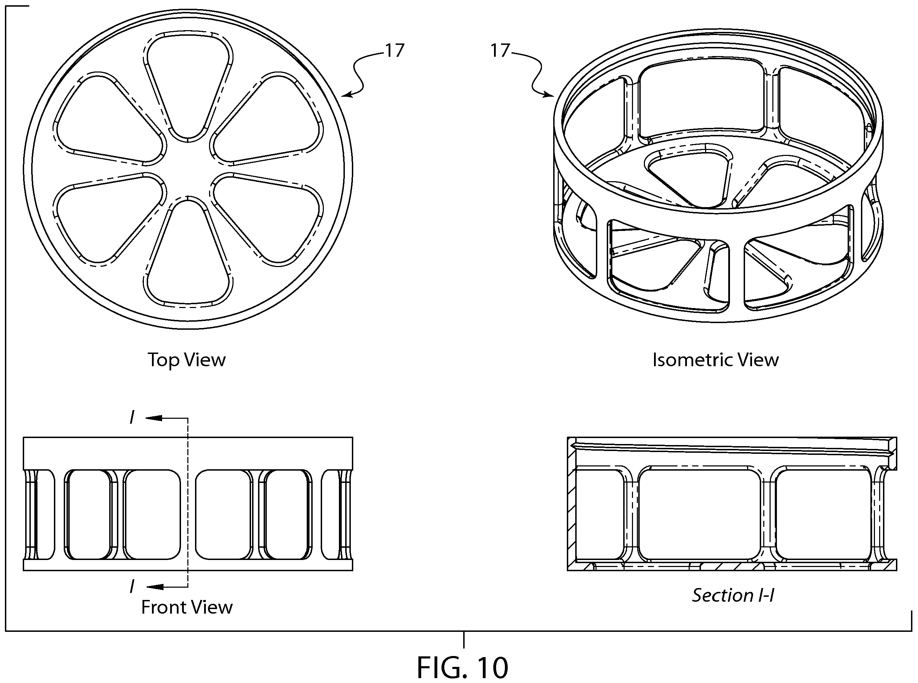

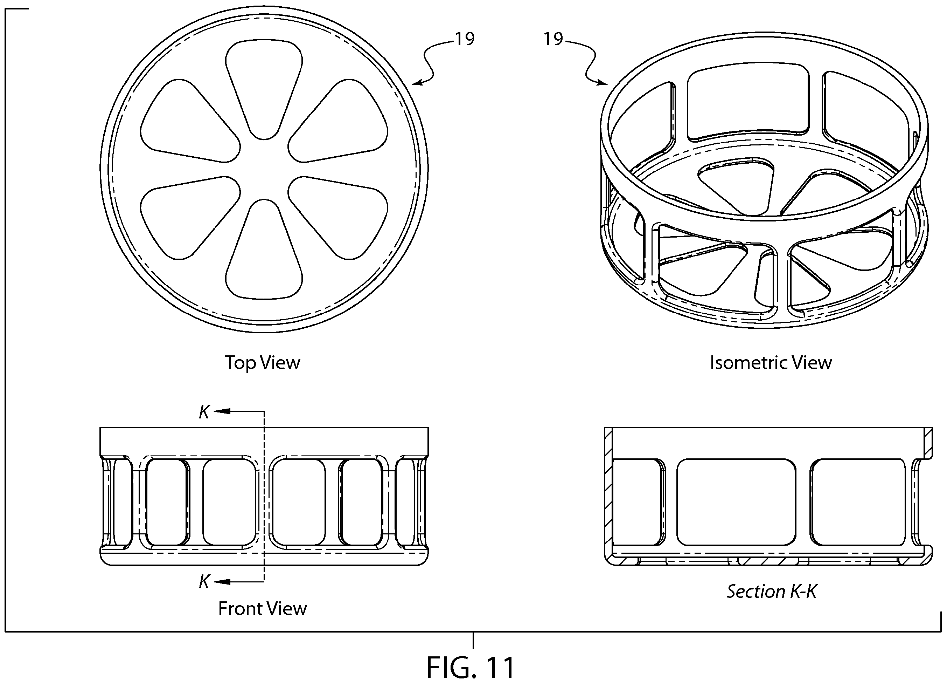

FIGS. 4-10 show the details of the various parts of the French Press Coffee Maker and more specifically the parts that make up one embodiment of the coffee grounds basket of the present principles;

### DETAILED DESCRIPTION

Before describing the figures in detail, applicant points out that the measurements, angles and all other specific indicia included in the drawings are for exemplary purposes only and are not in any way meant to limit the respective parts and their configurations. Departures from these indicia can be implemented without departing from the intended scope of this disclosure.

The following is a list of reference numerals and parts as shown in the Figures:
Bottom cup - 1 (preferably made of metal);
Glass Carafe or container - 2;
Lower handle bracket - 3;
Lid screw - 4;
Wire handle assembly - 5;
Carafe / Container Lid (metal) - 6;
Central Rod - 7;
Lid insert - 8 (plastic);
Lid nut - 9;
Bottom of upper press knob - 10;
Nut for press knob - 11;
Upper press knob (finial) 12;
Upper or top of grounds basket - 13;
Lower lid of grounds basket - 14;
Mesh lid for grounds basket - 15;
Silicone Ring - 16;
Grounds basket inner wall - 17;
Mesh basket for grounds basket - 18A;
Inner grounds basket cage - 18B;
Outer grounds basket cage - 19; and
Patterned sleeve (decorative) - 20.

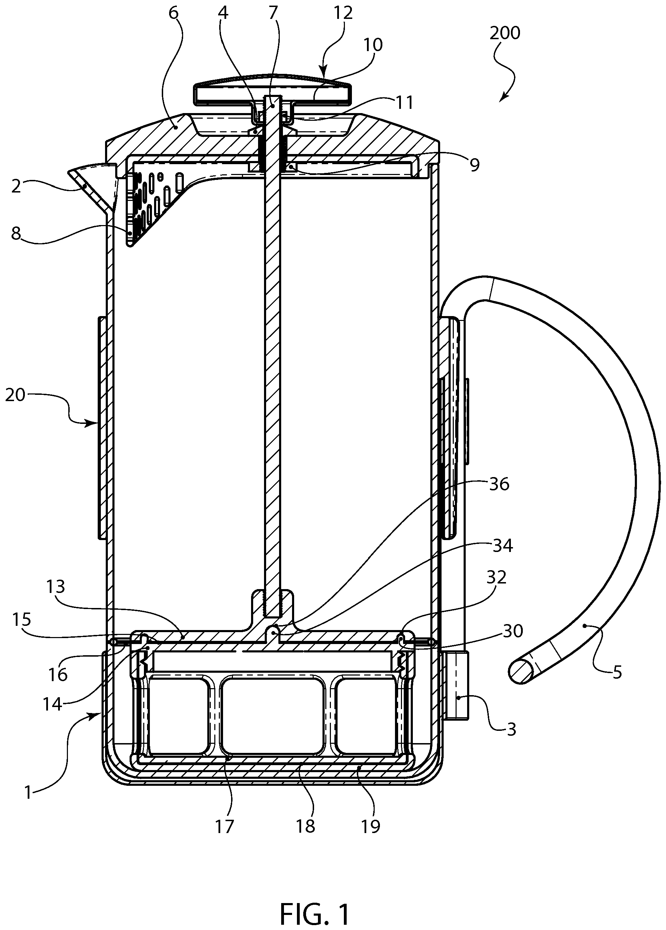

FIG. 1 shows a cross sectional view of a French press coffee maker 200 in accordance with the present principles. Applicant shall not discuss all of the operating parts of the coffee press as listed above and focuses on the inventive aspects of the same below.

As shown in FIG, 2, a coffee ground basket, generally depicted by reference numeral 100, is integrated into the press and operates to fully contain all the coffee grounds within the same.

The coffee ground basket has an outer cage 19 configured to receive a mesh basket 18A, which receives an inner cage 18B. The cages 19 and 18B are provided to add rigidity to the mesh basket 18A. Those of skill in the art will appreciate that the mesh basket 18A is generally made of a stainless steel metal foil having a micron sized mesh (e.g., 600 microns) and which, under pressure, could be crushed or deformed. As such support cages 19 and 18B are provided.

The inner cage 18B is covered by a lid 14 which can be removably secured thereto by threads, slots and notches or any other known means to secure a lid to a container. An upper mesh portion 15 is sandwiched between the lid 14 and an upper basket lid 13 and functions to completely enclose the mesh basket 18A which contains the coffee grounds. The connection between the upper basket lid 13 and the middle lid 14 can be performed with any known connection mechanism. As shown, a plurality of protrusions 30 can be positioned around the upper surface of the lid 14 with corresponding receiving holes 32 in the underside of the upper basket lid 13, such that a friction fit between the two parts operates to secure them together while retaining mesh portion 15 there between. A central protrusion 34 can assist in proper positioning of the upper lid 13 with respect to lid 14, and will be received by a hold 36 in the upper lid 13. Those of skill in the art will appreciate that the connection mechanism between upper lid 13 and middle lid 14 can be achieved in many different ways, including, but not limited to a mechanical latch system.

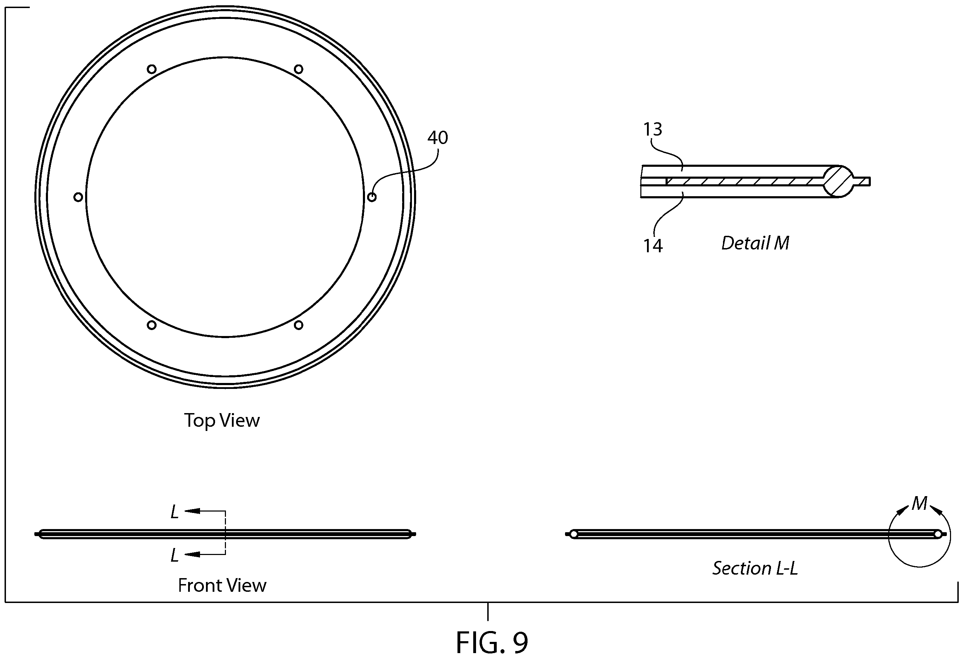

A silicon ring 16 is also secured between the upper lid 13 and the middle lid 14 such that the circumference of the same is in contact with the side walls of the carafe 2. The silicon ring 16 can include openings 40 that are aligned with the protrusions 30 in the middle lid such that the same does not shift or move once sandwiched between the upper lid 13 and middle lid 14. A cross section of one preferred implementation of the silicon ring is shown in FIG. 9.

In operation, the upper lid 13 is fixedly connected to the end of the press rod 7 by threading or other means. Thus, prior to use, the user will remove the basket 100 from the press. To open the basket, the user removes lid 14 from the inner cage 18B. This is generally done without having to separate the upper lid 13 from middle lid 14, thus keeping the sandwiched mesh plate 15 and silicon ring 16 in their proper operable positions. Once opened, the user fills the mesh basket 18A with the coffee grounds, and once filled, middle lid 14 is re-secured to the inner cage 18B with the provided locking mechanism.

The French press coffee maker is now ready for use by adding boiling water to the carafe 2 and sealing the top lid 6 to the same. Once assembled, the rod 7 can be moved downward (or upward), thus causing the brewing of the coffee contained in the basket. As will be appreciated, the silicone ring 16 seals the sides and the bottom of the coffee ground basket from liquid communication with the upper portion of the carafe/container 2. As such, when the rod 7 is moved downward, all liquid below and around the sides of the coffee grounds basket 100 will be forced through the basket and out the lid 14, through the mesh lid 15, thus operating to brew the coffee contained in the basket while maintaining all the coffee grounds within the same.

Once a user is finished drinking the freshly brewed coffee, the coffee ground basket assembly 100 can be removed from the carafe 2 and disassembled for removal of the used coffee grounds and cleaning. The carafe 2 will have no coffee grounds left in the same using the coffee grounds basket as disclosed here.

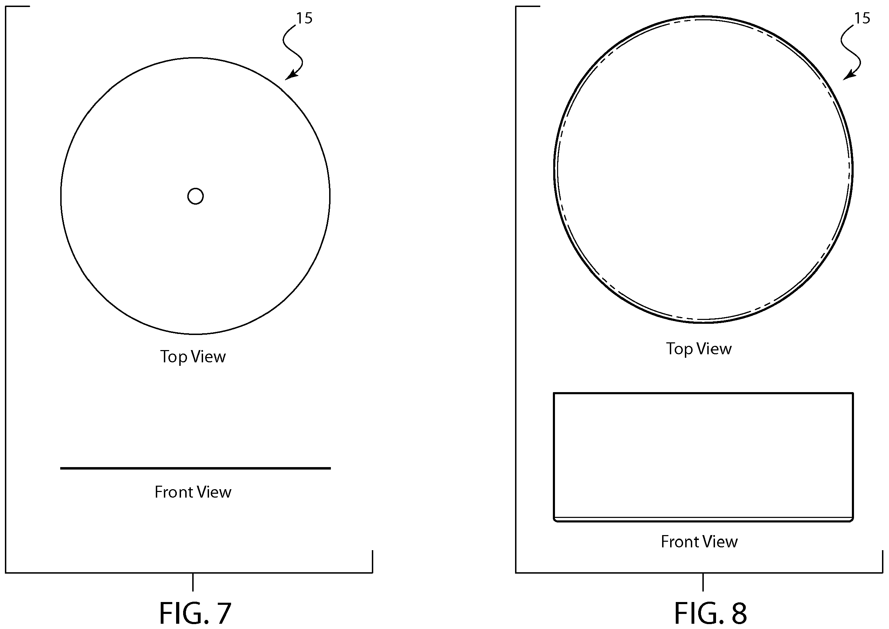

With reference to FIGS. 7 and 8, the mesh parts 15 and 18 have micron sized openings which cannot be easily depicted in the drawings shown. Those of skill in the art of coffee makers such as these will appreciate that the micron size can be varied so long as the same is sufficiently small to prevent the passing of coffee grounds from the basket into the water (i.e., coffee being dispensed).

For example, as noted above, the mesh basket 18A is positioned between an outer cage 19 and an inner cage 18B. This is because the micron perforated stainless steel used to fabricate mesh basket 18A is not rigid enough on its own to withstand the force applied to the same via rod 7.

While there have been shown, described and pointed out fundamental novel features of the present principles, it will be understood that various omissions, substitutions and changes in the form and details of the methods described and devices illustrated, and in their operation, may be made by those skilled in the art within the scope of the present claimed invention. For example, it is expressly intended that all combinations of those elements and/or method steps which perform substantially the same function in substantially the same way to achieve the same results are within the scope of the present claimed invention. Moreover, it should be recognized that structures and/or elements and/or method steps shown and/or described in connection with any disclosed form or implementation of the present claimed invention may be incorporated in any other disclosed, described or suggested form or implementation as a general matter of design choice. It is the intention, therefore, to be limited only as indicated by the scope of the claims appended hereto.

## Claims

1. A coffee press comprising:
a carafe (2) having a lid (6) ;
a press mechanism passing through the lid (12, 7), and
a coffee grounds basket (100) releseably connected to the press mechanism and configured to receive and completely contain coffee grounds within the same, wherein the coffee grounds basket comprises:
an outer cage (19);
a mesh basket (18A) configured to be received within said outer cage (19);
an inner cage (18B) configured to be received within said mesh basket (18A), said inner cage (18B) and outer cage (19) cooperating to provide structural rigidity to said mesh basket (18A); and
at least one lid configured to enclose an upper opening of the combined outer cage (19), mesh basket (18A) and inner cage (18B) so as to completely enclose the coffee grounds basket, **characterised in that** the lid further comprises:
a first lid (14) configured to engage and secure to the inner cage (18B);
a foil lid (15) positioned above said first lid (14); and
an upper lid (13) configured to connect to said first lid (14);
wherein said first lid (14) and said upper lid (13) cooperate to sandwich said foil lid (15) therebetween, and thereby completely enclosing the mesh basket (18A) with coffee grounds contained therein.

2. The coffee press according to claim 1, where the press mechanism comprises a movable rod (7) configured to move the coffee grounds basket (100) up or down within the carafe (2).

3. The coffee press according to claim 1, further comprising a sealing mechanism (16) connected to said lid and being configured to seal against internal side walls of the carafe (2) such that the sides and bottom of the coffee grounds basket (100) are sealed from liquid communication with an upper portion of the carafe (100) during a downward press action of the rod (7).

4. The coffee press according to claim 3, wherein said sealing mechanism comprises a silicone ring (16) secured between said first lid (14) and said upper lid (13).

5. The coffee press according to claim 1, wherein said first lid (14) and said upper lid (13) are connected using a friction fit connection.

## Patentansprüche

1. Eine Kaffeepresse, umfassend:
Eine Karaffe (2) mit einem Deckel (6);
einen Pressmechanismus, der durch den Deckel (12, 7) läuft, und
einen Kaffeesatzkorb (100), der lösbar mit dem Pressmechanismus verbunden und konfiguriert ist, das Kaffeepulver darin aufzunehmen und
vollständig zu halten, wobei der Kaffeesatzkorb Folgendes umfasst:
einen Außenkorb (19);
einen Drahtkorb (18A), der konfiguriert ist, in diesen Außenkorb (19) aufgenommen zu werden;
einen Innenkorb (18B), der konfiguriert ist, in diesen Drahtkorb (18A) aufgenommen zu werden, der Innenkorb (18B) und der Außenkorb (19) wirken zusammen, um dem Drahtkorb (18A) strukturelle Festigkeit zu bieten;
und
mindestens einen Deckel, der konfiguriert ist, eine obere Öffnung des kombinierten Außenkorbs (19), Drahtkorbs (18A) und Innenkorbs (18B) zu umschließen, um den Kaffeesatzkorb komplett zu umhüllen, **gekennzeichnet dadurch, dass** der Deckel ferner Folgendes umfasst:
einen ersten Deckel (14), der konfiguriert ist, sich mit dem Innenkorb (18B) zu verzahnen und diesen zu halten;
einen Foliendeckel (15), der über dem ersten Deckel (14) positioniert ist; und
einen oberen Deckel (13), der konfiguriert ist, sich mit dem ersten Deckel (14) zu verbinden;
wobei der erste Deckel (14) und der obere Deckel (13) zusammenwirken, um den Foliendeckel (15) dazwischen einzupressen, und dadurch den Drahtkorb (18A) vollständig mit dem darin enthaltenen Kaffeesatz zu umgeben.

2. Die Kaffeepresse nach Anspruch 1, wobei der Pressmechanismus eine bewegliche Stange (7) umfasst, die konfiguriert ist, den Kaffeesatzkorb (100) innerhalb der Karaffe (2) nach oben oder nach unten zu bewegen.

3. Die Kaffeepresse nach Anspruch 1, ferner umfassend einen Dichtungsmechanismus (16), der mit dem Deckel verbunden und konfiguriert ist, gegen die inneren Seitenwände der Karaffe (2) abzudichten, so dass die Seiten und der Boden des Kaffeesatzkorbs (100) von der Flüssigkeitsverbindung zu einem oberen Teil der Karaffe (100) während einer Abwärtsdruckbewegung der Stange (7) abgedichtet sind.

4. Die Kaffeepresse nach Anspruch 3, wobei der Dichtungsmechanismus einen Silikonring (16) umfasst, der zwischen dem ersten Deckel (14) und dem oberen Deckel (13) angebracht ist.

5. Die Kaffeepresse nach Anspruch 1, wobei der erste Deckel (14) und der obere Deckel (13) mittels Friction-Fit-Verbindung verbunden sind.

## Revendications

1. Cafetière à piston comprenant :
une carafe (2) possédant un couvercle (6) ;
un mécanisme de piston passant à travers le couvercle (12, 7) et
un panier de café moulu (100) relié de manière détachable au mécanisme de piston et conçu pour recevoir et contenir entièrement le café moulu à l'intérieur de celui-ci, dans laquelle le panier de café moulu comprend :
une cage extérieure (19) ;
un panier à mailles (18A) conçu pour être reçu à l'intérieur de ladite cage extérieure (19) ;
une cage intérieure (18B) conçue pour être reçue à l'intérieur dudit panier à mailles (18A), ladite cage intérieure (18B) et la cage extérieure (19) coopérant pour fournir la rigidité structurale audit panier à mailles (18A) ; et
au moins un couvercle conçu pour fermer une ouverture supérieure de la cage extérieure (19), du panier à mailles (18A) et de la cage intérieure combinés (18B) de manière à fermer entièrement le panier de café moulu,
**caractérisée en ce que** le couvercle comprend en outre :
un premier couvercle (14) conçu pour entrer en prise et se fixer solidement à la cage intérieure (18B) ;
un couvercle en aluminium (15) positionné au-dessus dudit premier couvercle (14) ; et
un couvercle supérieur (13) conçu pour être relié audit premier couvercle (14) ;
dans laquelle ledit premier couvercle (14) et ledit couvercle supérieur (13) coopèrent pour intercaler ledit couvercle en aluminium (15) entre ceux-ci et enfermant donc entièrement le panier à mailles (18A) avec le café moulu contenu dans celui-ci.

2. Cafetière à piston selon la revendication 1, où le mécanisme de piston comprend une tige mobile (7) conçue pour déplacer le panier de café moulu (100) vers le haut ou vers le bas à l'intérieur de la carafe (2).

3. Cafetière à piston selon la revendication 1, comprenant en outre un mécanisme d'étanchéité (16) relié audit couvercle et étant conçu pour assurer l'étanchéité contre les parois latérales internes de la carafe (2) de sorte que les parois et le fond du panier de café moulu (100) sont hermétiquement fermés contre la communication de liquide avec la partie supérieure de la carafe (100) pendant une action du piston vers le bas sur la tige (7).

4. Cafetière à piston selon la revendication 3, dans laquelle ledit mécanisme d'étanchéité comprend un anneau en silicone (16) fixé solidement entre ledit premier couvercle (14) et ledit couvercle supérieur (13).

5. Cafetière à piston selon la revendication 1, dans laquelle ledit premier couvercle (14) et ledit couvercle supérieur (13) sont reliés à l'aide d'une liaison à ajustement serré.
